# EUROPÄISCHE PATENTANMELDUNG

(11) **EP 1 674 709 A2**
(43) Veröffentlichungstag der Anmeldung: **28.06.2006**
(21) Anmeldenummer: 05027251.7
(22) Anmeldetag: 14.12.2005
(51) Int. Cl.: F02M 21/00, F02M 23/00, F02M 25/00

(54) **Brennkarftmaschine**

(30) Priorität: 23.12.2004 AT 21672004
(71) Anmelder: GE Jenbacher GmbH & Co OHG, 6200 Jenbach (AT)
(72) Erfinder: Plohberger, Diethard, 68259 Mannheim (DE); Chvatal, Dieter, 6200 Jenbach (AT); Schäffert, Peter, 6200 Buch bei Jenbach (AT)
(74) Vertreter: Hofinger, Stephan

(57) **Zusammenfassung**

Brennkraftmaschine, Insbesondere Gasmotor, mit einer Einrichtung (1) zur Bereitstellung eines Brennstoff-Luft-Gemisches und zumindest einer von dieser Einrichtung (1) zu einem Verdichter (3) führenden Gemischzuleitung (2) sowie mit zumindest einer vom Verdichter (3) zu mindestens einer Brennkammer führenden Gemischeinlassleitung (4), wobei zumindest eine Zuführeinrichtung (5) für zusätzliches Brennstoff-Luft-Gemisch und/oder zumindest eine Zuführeinrichtung (5') für zusätzlichen Brennstoff und zusätzliche Luft vorgesehen ist (sind), welche, vorzugsweise direkt, in den Verdichter (3) und/oder in die Gemischzuleitung (2) und/oder in die Gemischeinlassleitung (4) mündet (münden).

## Beschreibung

Die vorliegenda Erfindung betrifft eine Brennkraftmaschine, insbesondere einen Gasmotor, mit einer Einrichtung zur Bereitstellung eines Brennstoff-Luft-Gemisches und zumindest einer von dieser Einrichtung zu einem Verdichter führenden Gemischzuleitung sowie mit zumindest einer vom Verdichter zu mindestens einer Brennkammer führenden Gemischelnlassleitung.

So genannte gemlschaufgeladene Brennkraftmaschinen mit einem Verdichter sind beim Stand der Technik bekannt. Die Brennkammern dieser Brennkraftmaschinen sind häufig Teil von Kolben- und Zylinderanordnungen. Aufgabe der Erfindung ist es, diese Brennkraftmaschinen dahingehend zu verbessern, dass sie möglichst rasch auf Laständerungen reagieren bzw. in möglichst kurzer Zeit höhere Leistungen abgeben können.

Erfindungsgemäß wird dies erreicht, indem eine Zuführeinrichtung für zusätzliches Brennstoff-Luft-Gemlsch und/oder eine Zuführeinrichtung für zusätzlichen Brennstoff und zusätzliche Luft vorgesehen ist (sind), welche, vorzugsweise direkt, in den Verdichter und/oder in die Gemischzuleltung und/oder in die Gemischeinlassleitung mündet (münden).

Der oder den Brennkammern der gemlschaufgeladenen Brennkraftmaschine wird also nicht nur wie üblich Brennstoff-Luft-Gemisch sondern über die Zuführeinrichtung auch noch zusätzliches Brennstoff-Luft-Gemisch und/oder zusätzlicher Brennstoff und zusätzliche Luft zugeführt. Hierdurch ist es möglich, den Druck vor und in den Brennkammern kurzfristig zu erhöhen und damit die von der Brennkraftmaschine abgegebene Leistung zu steigern, ohne dass sich hierbei zwangsläufig das Mischungsverhältnis des Brennstoff-Luft-Gemisches ändert.

Verschiedene Ausführungsformen der Erfindung werden anhand der nachfolgenden Figutenbeschreibung erläutert, Dabei zeigt:
- Fig. 1: ein erstes erfindungsgemäßes Ausführungsbeispiel, bei dem zusätzliches Brennstoff-Luft-Gemisch zugeführt wird und
- Fig. 2: ein zweites erfindungsgemäßes Ausführungsbeispiel bei dem zusätzlicher Brennstoff und zusätzliche Luft zugeführt werden.

Die Figuren zeigen einen Turbolader 11 mit einem Verdichter 3 und einer Turbine 12. Der Verdichter 3 weist ein Verdichterlaufrad 6 auf, welches mit einem entsprechenden Laufrad der Turbine 12 bewegungsgekoppelt ist. Die Einrichtung 1 stellt ein Brennstoff-Luft-Gemisch zur Verfügung, das über die Gemischzuleitung 2 dem Verdichter 3 zugeführt und mittels diesem komprimiert wird. Die Einrichtung 1 kann, wie beim Stand der Technik bekannt, zum Beispiel als Gasmischer oder Vergaser, mit entsprechenden Brennstoff- und Luftzuleitungen ausgeführt sein. Am Ausgang des Verdichters 3 ist eine Gemischeinlassleitung 4 angeordnet, die wie an sich bekannt gegebenenfalls über eine Drosselklappe oder andere bekannte Bauteile zu den Brennkammern der Brennkraftmaschine führt. Die Brennkammern bzw. der Motorblock sind nicht explizit dargestellt. In der Regel handelt es sich aber um mehrzyllndrige Motoren, insbesondere gemischaufgeladene Gasmotoren. Die Abgase dieser Motoren werden wie bekannt in der Abgasleitung 13 gesammelt und der Turbine 12 zugeführt. Deren Laufrad erfährt durch Beaufschlagung mit Abgas eine Drehbewegung, die wie an sich bekannt auf das Verdichterlaufrad 6 des Turboladers 11 übertragen wird. Im Normalbetrieb bei hochgefahrener Brennkraftmaschine reicht diese Form des Antriebs des Vordichterlaufrads 6 in der Regel dazu aus, das Brennstoff-Luft-Gemisch für einen optimalen Betrieb der Brennkraftmaschine ausreichend zu komprimieren. Probleme ergeben sich, wenn die Leistung der Brennkraftmaschine rasch hochgefahren werden soll, da dann das rein durch die Turbine 12 angetriebene Verdichterlaufrad das Brennstoff-Luft-Gemlsch nicht sofort Im gewünschten Maße höher komprimieren kann. Bei bekannten Brennkraftmaschinen dieser Art dauert es eine gewisse Zeit, bis das Verdichterlaufrad 6 ausreichend beschleunigt ist. Um dieses Problem zu beseitigen ist gemäß der Erfindung die Zuführeinrichtung 5, 5' für zusätzliches Brennstoff-Luft-Gemisch und/oder für zusätzlichen Brennstoff und zusätzliche Luft vorgesehen.

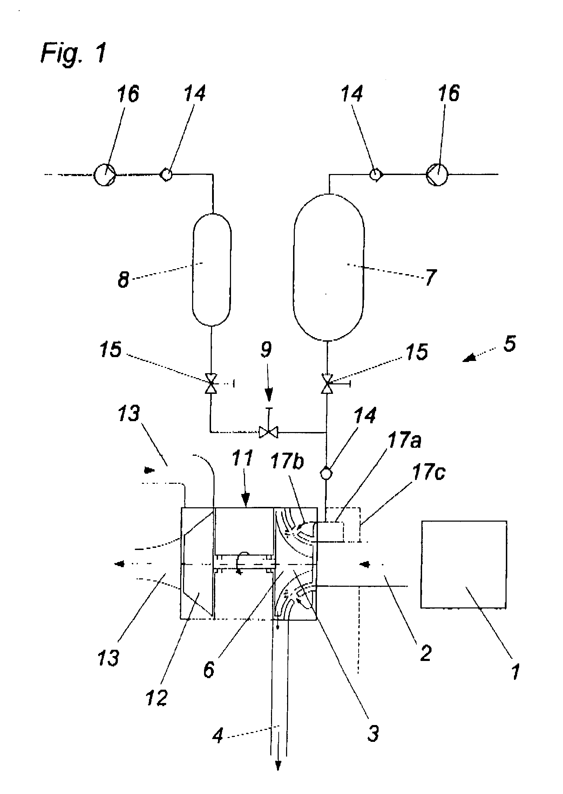

Fig. 1 zeigt ein Ausführungsbeispiel, bei dem die Zuführeinrichtung 5 dazu vorgesehen ist, zusätzliches Brennstoff-Luft-Gemisch in die Gemischzuleitung 2 und/oder in den Verdichter 3 und/oder in die Gemlschelnlassieltung 4 einzubringen. Hierzu weist sie je nach Ausführungsform entsprechende Leitungen 17a und/oder 17b und/oder 17c auf. Durch Einbringen des zusätzlichen Brennstoff-Luft-Gemisches ist es möglich, den Druck im Verdichter 3 und In der (den) Brennkammer(n) (bei Varianten 17a und/oder 17b) bzw. in der (den) Brennkammer(n) (bei Varianten 17a und/oder 17b und/oder 17c) rasch zu steigern, wodurch die Brennkraftmaschine sehr schnell in ihrer Leistung hochgefahren werden kann. Das. Zuführen des zusätzlichen Brennstoff-Luft-Gemisches in die Gemischzuleitung 2 und/oder den Verdichter 3 hat dabei den zusätzlichen Vorteil, dass damit gleich das Vordichterlaufrad 6 und damit auch das damit bewegungsgekoppelte Turbinenlaufrad beschleunigt wird, während beim Einmünden über die Leitung 17c in die Gemischeinlasoleitung 4 diese Beschleunigung von Verdichterlaufrad 6 und Turbine 12 erst indirekt über den gesteigerten Druck in der Abgasleitung 13 erfolgt. Die Zuführeinrichtung 5 ist günstigerweise dazu geeignet zusätzliches Brennstoff-Luft-Gemisch zuzuführen, welches zumindest and der (den) Einmündung(en) der Zuführeinrichtung 5, 5' unter einem höheren Druck steht als das Brennstoff-Luft-Gemisch der Einrichtung 1.

Besonders günstig kann die Erfindung bei gemischaufgeladenen Gasmotoren eingesetzt werden, bei denen der Brennstoff des Brennstoff-Luft-Gemisches ein brennbares Gas ist. Grundsätzlich ist es hierbei günstig, wenn die Zuführeinrichtung 5, 5' dazu geeignet ist, als zusätzlichen Brennstoff und/oder als Brennstoff des zusätzlichen Brennstoff-Luft-Gemisches den Typ Brennstoff zuzuführen, der auch in dem von der Einrichtung 1 bereitstellbaren Brennstoff-Luft-Gemisch vorhanden ist.

Die in Fig. 1 dargestellte Varlante der Zuführeinrichtung 5 weist unter anderem einen mit Druckluft befüllbaren Luftspeicher 7 und einen mit unter Überdruck stehendem, zusätzlichen Brennstoff befüllbaren Brennstoffspeicher 8 auf. Das Verhältnis der Spelchervolumina des Luftspeichers 7 und des Brennstoffspeichers 8 ist günstigerweise proportional zu dem Mischungsverhältnis, mit dem die Einrichtung 1 das Brennstoff-Luft-Gemisch herstellt. Das Verhältnis der Speichervolumina entspricht somit günstigerweise einem vorgebbaren Mischungsverhältnis des Brennstoff-Luft-Gemisches. Das Aufladen der Speicher 7 und 8 erfolgt über entsprechende Pumpen 16. Die Rückschlagventile 14 verhindern ein Rückströmen der Gase. Um die Zuführeinrichtung 5 zu aktivieren, werden die Absperrventile 15 geöffnet. Die Mischeinrichtung 9 sorgt für die Zuspeisung einer entsprechenden Menge zusätzlichen Brennstoffs aus dem Tank 8 zur Druckluft aus dem Tank 7. Es kann sich hierbei um eine steuerbare Mischeinrichtung 9 handeln, welche dazu geeignet ist, das zusätzliche Brennstoff-Luft-Gemisch in Abhängigkeit von vorgebbaren Werten zu mischen. Alternativ ist es auch möglich, die Mischeinrichtung 9 regelbar auszubilden. Das heißt, dass sie in diesem Fall dazu geeignet ist, das zusätzliche Brennstoff-Luft-Gemisch in Abhängigkeit mindestens eines gemessenen Motorparameters und/oder des gemessenen Mischungsverhältnisses des von der Einrichtung 1 bereitgestellten Brennstoff-Luft-Gemisches zu mischen. Die technische Realisierung des Regelkreises für die Mischeinrichtung 9 kann dabei in Analogie zu bekannten Regelstrategien für Gasmischer oder Vergaser, wie sie In der Einrichtung 1 verwendet werden können, ausgeführt sein.

Durch die steuerbare oder regelbare Mischeinrichtung 9 wird günstigerweise das Mischungsverhältnis des zusätzlichen Brennstoff-Luft-Gemisches so eingestellt, dass es dem von der Einrichtung 1 bereitgestellten Brennstoff-Luft-Gemisch entspricht. Dies sorgt dafür, dass der Turbolader 11 beschleunigt und der hier nicht näher dargestellte Motor gleichzeitig Brennstoff und Luft im erforderlichen Mischungsverhältnis zur Verfügung gestellt bekommt. Durch die entsprechend angepassten Volumenverhältnisse der Speicher 7 und 8 sinken die Drücke im Luftspeicher 7 und im Brennstoffspeicher 8 gleich schnell ab und das Mischungsverhältnis bleibt im Wesentlichen auch ohne drastischen Eingriff der Mischeinrichtung 9 konstant. Diese kann dann für die Feinabstimmung genutzt werden.

Im Anschluss an die entsprechende Mischung des zusätzlichen Brennstoff-Luft-Gemisches wird dieses über ein Rückschlagventil 14 und über die Leitungen 17a und/oder 17b und/oder 17c der Gemischzuleitung 2 und/oder dem Verdichter 3 und/oder der Gemischeinlassleitung 4 zugeführt. Bei der Variante mit der Leitung 17b mündet die Zuführeinrichtung 5 günstigerweise so in den Verdichter, dass das zusätzliche Brennstoff-Luft-Gemisch direkt auf das Verdichterlaufrad 6 des Verdichters 3 gelenkt wird. Hierbei Ist es günstigerweise vorgesehen, dass die Zuführeinrichtung 5 bzw. die Leitung 17b und die Gemischzuleitung 2 durch unterschiedliche Einmündungen in den Verdichter 3 münden.

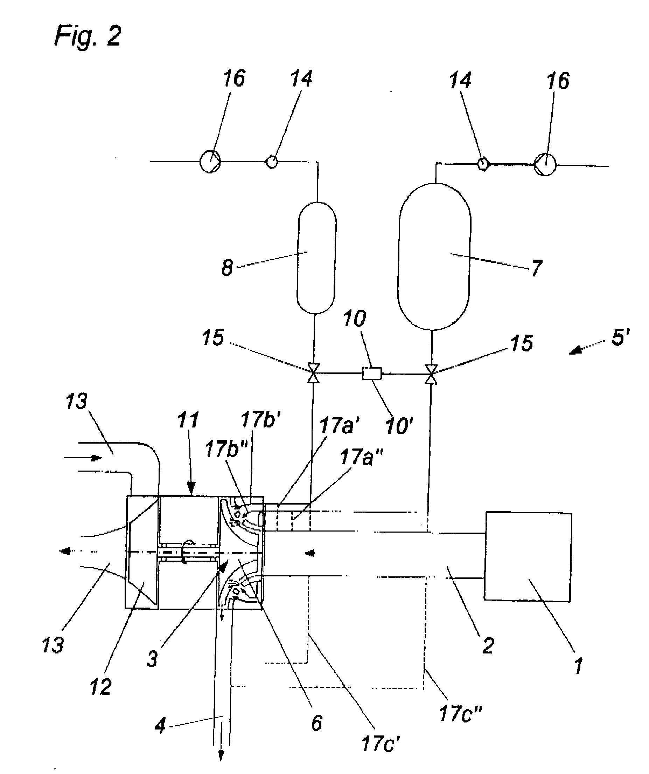

Fig. 2 zeigt eine zweite Variante, bei der die zusätzliche Zuführeinrichtung 5' jeweils zwei Einmündungen in die Gemlschzuleitung 2 und/oder dem Verdichter 3 und/oder in die Gemischeinlassleitung 4 aufweist, wobei durch diese Einmündung der zusätzliche Brennstoff und die zusätzliche Luft getrennt von einander zuführbar sind. Es existieren hierbel jeweils immer eigene Leitungen 17a' und/oder 17b' und/oder 17c' für den zusätzlichen Brennstoff und eigene Leitungen 17a" und/oder 17b" und/oder 17c" für die Druckluft, Bereitgestellt wird beides wie beim Ausführungsbeispiel (gemäß Fig. 1) wiederum über die Speicher 7 und 8. Anstelle der Mischeinrichtung 9 Ist jedoch eine Volumensteuereinrichtung 10 oder eine Volumenregeleinrichtung 10' vorgesehen, welche die Absperrventile 15 entsprechend öffnet und schließt. Bei der Variante als Volumensteuereinrichtung 10 ist es dann vorgesehen, das Volumenverhältnls des zusätzlichen Brennstoffes und der zusätzlichen Luft In Abhängigkeit von vorgebbaren Werten zu steuern. In der Ausführungsvariante als Volumenregeleinrichtung 10' ist diese günstigerweise dazu geeignet, das Volumenverhältnis zwischen dem zusätzlichen Brennstoff und der zusätzlichen Luft in Abhängigkeit eines gemessenen Motorparameters und/oder In Abhängigkeit des Mischungsverhältnisses des von der Einrichtung 1 bereitgestellten Brennstoff-Luft-Gemisches zu regeln. Auch bei der getrennten Zuführung von zusätzlichem Brennstoff und zusätzlicher Luft Ist es wiederum besonders günstig diese direkt auf das Verdichterlaufrad des Verdichters 3 zu lenken, wie dies durch die Leitungen 17b' und 17b" der Zuführeinrichtung 5' dargestellt ist.

Auch wenn die gezeigten Ausführungsbeispiele besonders vorteilhaft bei großen stationären und mit brennbaren Gasen betriebenen Brennkraftmaschinen eingesetzt werden können, so bedeutet dies keine Beschränkung, da die Erfindung auch bei kleineren Motoren, zum Beispiel für Kraftfahrzeuge, gewinnbringend dazu eingesetzt werden kann, das Beschleunigungsverhalten zu verbessern.

## Patentansprüche

1. Brennkraftmaschine, insbesondere Gasmotor, mit einer Einrichtung zur Bereitstellung eines Brennstoff-Luft-Gemisches und zumindest einer von dieser Einrichtung zu einem Verdichter führenden Gemischzuleitung sowie mit zumindest einer vom Verdichter zu mindestens einer Brennkammer führenden Gemischeinlassleitung, **dadurch gekennzeichnet, dass** zumindest eine Zuführeinrichtung (5) für zusätzliches Brennstoff-Luft-Gemisch und/oder zumindest eine Zuführeinrichtung (5') für zusätzlichen Brennstoff und zusätzliche Luft vorgesehen ist (sind), welche, vorzugsweise direkt, In den Verdichter (3) und/oder in die Gemischzuleitung (2) und/oder In die Gemischeinlassleitung (4) mündet (münden).

2. Brennkraftmaschine nach Anspruch 1, **dadurch gekennzeichnet, dass** die Zuführeinrichtung (5, 5') dazu geeignet ist, zusätzliches Brennstoff-Luft-Gemisch oder zusätzlichen Brennstoff und zusätzliche Luft so dem Verdichter (3) und/oder der Gemischzuleitung (2) und/oder der Gemischelnlassieltung (4) zuzuführen, dass hierdurch der Druck im Verdichter (3) bzw. in der Brennkammer steigerbar ist.

3. Brennkraftmaschine nach Anspruch 1 oder 2, **dadurch gekennzeichnet, dass** die Zuführeinrichtung (5, 5') dazu geeignet ist, zusätzliches Brennstoff-Luft-Gemisch oder zusätzlichen Brennstoff und zusätzliche Luft so dem Verdichter (3) und/oder der Gemischzuleitung (2) zuzuführen, das damit ein Verdichterlaufrad (6) im Verdichter (3) beschleunigbar ist.

4. Brennkraftmaschine nach einem der Ansprüche 1 bis 3, **dadurch gekennzeichnet, dass** die Zuführeinrichtung (5, 5') dazu geeignet ist, zusätzliches Brennstoff-Luft-Gemisch oder zusätzlichen Brennstoff und zusätzliche Luft zuzuführen, welches (welche) zumindest an der (den) Einmündung(en) der Zuführeinrichtung (5, 5') unter einem höheren Druck steht (stehen) als das Brennstoff-Luft-Gemisch der Einrichtung (1).

5. Brennkraftmaschine nach einem der Ansprüche 1 bis 4, **dadurch gekennzeichnet, dass** der Brennstoff des von der Einrichtung (1) bereitstellbaren Brennstoff-Luft-Gemisches und/oder der zusätzliche Brennstoff und/oder der Brennstoff des zusätzlichen Brennstoff-Luft-Gemisches ein brennbares Gas ist.

6. Brennkraftmaschine nach einem der Ansprüche 1 bis 5, **dadurch gekennzeichnet, dass** die Zuführeinrichtung (5, 5') dazu geeignet ist, als zusätzlichen Brennstoff und/oder als Brennstoff des zusätzlichen Brennstoff-Luft-Gemisches den Brennstoff zuzuführen, der auch in dem von der Einrichtung (1) bereitstellbaren Brennstoff-Luft-Gemisch vorhanden ist.

7. Brennkraftmaschine nach einem der Ansprüche 1 bis 6, **dadurch gekennzeichnet, dass** die Zuführeinrichtung (5. 5') so in den Verdichter mündet, dass sie dazu geeignet ist, das zusätzliche Brennstoff-Luft-Gemisch oder den zusätzlichen Brennstoff und/oder die zusätzliche Luft direkt auf ein Verdichterlaufrad (6) des Verdichters (3) zu lenken.

8. Brennkraftmaschine nach einem der Ansprüche 1 bis 7, **dadurch gekennzeichnet, dass** die Zuführeinrichtung (5, 5') und die Gemischzuleitung (2) durch unterschiedliche Einmündungen in den Verdichter (3) münden.

9. Brennkraftmaschine nach einem der Ansprüche 1 bis 8, **dadurch gekennzeichnet, dass** die Zuführeinrichtung (5, 5') einen, vorzugsweise mit Druckluft befüllbaren, Luftspeicher (7) und/oder einen, vorzugsweise mit unter Überdruck stehendem zusätzlichem Brennstoff befüllbaren, Brennstoffspeicher (8) aufweist.

10. Brennkraftmaschine nach Anspruch 9, **dadurch gekennzeichnet, dass** das Verhältnis der Speichervolumina des Luftspeichers (7) und des Brennstoffspeichers (8) Im Wesentlichen einem vorgebbaren Brennstoff-Luft-Verhältnis des zusätzlichen Brennstoff-Luft-Gemisches entspricht.

11. Brennkraftmaschine nach einem der Ansprüche 1 bis 10, **dadurch gekennzeichnet, dass** die Zuführeinrichtung (5) eine steuerbare Mischeinrichtung (9) aufweist, welche dazu geeignet ist, das zusätzliche Brennstoff-Luft-Gemisch in Abhängigkeit von vorgebbaren Werten zu mischen.

12. Brennkraftmaschine nach einem der Ansprüche 1 bis 10, **dadurch gekennzeichnet, dass** die Zuführeinrichtung (5) eine regelbare Mischeinrichtung (9) aufweist, welche dazu geeignet ist das zusätzliche Brennstoff-Luft-Gemisch in Abhängigkeit mindestens eines gemessenen Motorparameters und/oder des gemessenen Mischungsverhältnisses des von der Einrichtung (1) bereitstellbaren Brennstoff-Luft-Gemisches zu mischen.

13. Brennkraftmaschine nach einem der Ansprüche 1 bis 10, **dadurch gekennzeichnet, dass** die Zuführeinrichtung (5') mindestens zwei Einmündungen in den Verdichter (3) und/oder In die Gemischzuleitung (2) und/oder in die Gemischeinlassleitung (4) aufweist, wobei durch diese Einmündungen der zusätzliche Brennstoff und die zusätzliche Luft getrennt voneinander zuführbar sind.

14. Brennkraftmaschine nach Anspruch 13, **dadurch gekennzeichnet, dass** die Zuführeinrichtung (5') so in den Verdichter (3) mündet, dass sie dazu geeignet Ist, den zusätzlichen Brennstoff und/oder die zusätzliche Luft direkt auf ein Verdichterlaufrad (6) des Verdichters (3) zu lenken.

15. Brennkraftmaschine nach Anspruch 13 oder 14, **dadurch gekennzeichnet, dass** die Zuführeinrichtung (5') eine Volumensteuereinrichtung (10) aufweist, welche dazu geeignet ist, das Volumenverhältnis des zusätzlichen Brennstoffes und der zusätzlichen Luft in Abhängigkeit von vorgebbaren Werten zu steuern.

16. Brennkraftmaschine nach Anspruch 13 oder 14, **dadurch gekennzeichnet, dass** die Zuführeinrichtung (5') eine Volumenregeleinrichtung (10') aufweist, welche dazu geeignet ist, das Volumenverhältnis zwischen dem zusätzlichen Brennstoff und der zusätzlichen Luft In Abhängigkeit eines gemessenen Motorparameters und/oder in Abhängigkeit des Mischungsverhältnisses des von der Einrichtung (1) bereitgestellten Brennstoff-Luft-Gemisches zu regeln.

17. Brennkraftmaschine nach einem der Ansprüche 1 bis 16, **dadurch gekennzeichnet, dass** der Verdichter (3) Tell eines Turboladers (11) ist, wobei der Turbolader (11) eine in einer Abgasleitung (13) der Brennkraftmaschine angeordnete Abgasturbine (12) aufweist, mit der der Verdichter (3) bewegungsgekoppelt Ist.

18. Zuführeinrichtung geeignet für eine Brennkraftmaschine nach einem der Ansprüche 1 bis 17.
